(19)

**Europäisches Patentamt**

**European Patent Office**

**Office européen des brevets**

(11) **EP 4 468 196 A1**

(12) **EUROPEAN PATENT APPLICATION**

(43) Date of publication:
**27.11.2024 Bulletin 2024/48**

(21) Application number: **24162389.1**

(22) Date of filing: **08.03.2024**

(51) International Patent Classification (IPC):
***G06F 40/30*** (2020.01)          ***G06F 16/34*** (2019.01)

(52) Cooperative Patent Classification (CPC):
**G06F 40/30; G06F 16/34; G06N 3/08;** G06N 3/045

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023   FI 20235288
22.06.2023   FI 20235728**

(71) Applicant: **Sofor Oy
62201 Kauhava (FI)**

(72) Inventors:
• **Hietamäki, Santtu
20540 Turku (FI)**
• **Salo, Seppo
62201 Kauhava (FI)**

(74) Representative: **Berggren Oy
P.O. Box 16
Eteläinen Rautatiekatu 10A
00101 Helsinki (FI)**

(54) **CODING ACCIDENTS**

(57)      There is provided system for coding accidents comprising: at least one computerized model configured to classify natural language according to accident classification codes; and a user interface component, wherein said user interface component is configured to communicate with the at least one computerized model for receiving accident classification codes from the at least one computerized model; and a controller connected to the at least one computerized model and the user interface component, said controller configured to cause: receive a natural language input in a computer readable format by the at least one computerized model; receive accident classification codes generated by the at least one computerized model based on the natural language input in a computer readable format; and at least one of the following: control the user interface component to display the received accident classification codes; or transmit the received accident classification codes to another system.

202 receiving a natural language input in a computer readable format by at least one computerized model configured to classify natural language input according to an accident classification

204 receiving, by user interface component configured to communicate with the at least one computerized model, accident classifications from the at least one computerized model

206 controlling, by a controller connected to the at least one a computerized model and the user interface component, the user interface to display the received accident classifications and/or transmitting the received accident classifications to another system

Fig. 2

**Description**

**TECHNICAL FIELD**

The examples and non-limiting embodiments relate generally to coding of accidents in accident reports.

**BACKGROUND**

Occupational safety systems are used for reporting accidents at work. Accidents are reported using the European Statistics on Accidents at work (ESAW) coding that is defined by [EUROSTAT ESAW methodology]: "European Statistics on Accidents at Work (ESAW) Summary and methodology", ISBN 978-92-79-28419-9, 2013 Edition. Each of the classes of the classification includes codes that can be selected to describe an accident at work.

Accident reports typically include an articulate description of an accident made by a supervisor of an employee and applicable ESAW codes that are selected by the supervisor. Accidents reports can be made on computerized forms that may be filled out via an internet-browser, such as Chrome or Safari. Accidents reports can be made also on paper. Regardless of the format of the accident reports, quality of an accident report is dependent on a supervisor's, i.e. human's, input, i.e. an articulate description on the accident that has occurred and ESAW codes elected by the supervisor. In order for the supervisor to know what to write down on the accident report and which ESAW codes to selected the supervisor needs extensive training. Also, when an accident takes place, the supervisor needs to take time to carefully fill out the accident report such that the ESAW codes are correct and description of the accident is sufficient. However, there is no way to measure the sufficiency of the description and/or correctness of the ESAW codes, whereby the evaluation made by the supervisor is subjective. In the desirable situation, where work related accidents are few, it can become impossible for a supervisors to develop or maintain a routine for completing an accident report such that the ESAW codes are correct and description of the accident is sufficient.

Accident reports are processed based on the ESAW codes and articulate description of the accidents. It is important to complete an accident report such that the ESAW codes are correct, and description of the accident is sufficient, since additions of information or amendments of the accident report later may be difficult at least if the responsible supervisor needs to rely on his/her memory. It is likewise important to detect early, if an accident report has been made by a responsible supervisor, but the ESAW codes are at least partially incorrect and/or description of the accident is insufficient, whereby the accident report can be supplemented while the responsible supervisor can remember the accident well and/or facts of the accident can be collected to supplement the accident report. Examples of the facts that could be relevant are video footage from the site of the accident, computer system logs and machine logs of the machine that has been involved in the accident.

Transformer network, or a transformer [Transformer], is a deep learning structure that makes few architectural assumptions about the relationship between its inputs, but that also scales to hundreds of thousands of inputs. The transformer network adopts the mechanism of attention, differentially weighing the significance of each part of the input data. Similarly to a Convolutional Neural Network it can effectively learn the relationship of multiple very large input matrices related to the predicted target. An example of use of the transformer network, called Perceiver, for learning relationships between inputs is described in https://arxiv.org/pdf/2103.03206.pdf. These transformer networks can also be used in conjunction with transfer learning and implemented with few lines of code as described for the Perceiver that is a special case of a transformer network in https://pythonrepo.com/repo/lucidrains-perceiver-pytorch. Perceiver describes a transformer network that, similarly to a Convolutional Neural Network, is able to recognize spatial relationships which are essential in understanding the concept of structured multimodal inputs and their relationship to the predicted target. The Perceiver uses a cross-attention module to project an input high-dimensional byte array to a fixed-dimensional latent bottleneck before processing it using a stack of transformers in the low-dimensional latent space. The Perceiver iteratively attends to the input byte array by alternating cross-attention and latent transformer blocks.

**SUMMARY**

The scope of protection sought for various embodiments of the invention is set out by the independent claims. Some further aspects are defined in the dependent claims. The embodiments, examples and features, if any, described in this specification that do not fall under the scope of the independent claims are to be interpreted as examples useful for understanding various embodiments of the invention.

**BRIEF DESCRIPTION OF THE DRAWINGS**

The foregoing aspects and other features are explained in the following description, taken in connection with the accompanying drawings, wherein:

Fig. 1 is a block diagram of one possible and non-limiting system in which the example embodiments may be practiced;

Fig. 2 illustrates an example of a method for in accordance with at least some embodiments;

Fig. 3 illustrates an example of computerized models for classifying natural language according to accident classification codes in accordance with at least some embodiments,

Fig. 4 illustrate an example of a user interface of an accident report in accordance with at least some embodiments,

Fig. 5 is a block diagram of one possible and non-limiting system in which the example embodiments may be practiced; and

Fig. 6 illustrates an example of a method for selecting accident codes.

## DETAILED DESCRIPTION OF EXAMPLE EMBODIMENTS

Accidents are reported using the European Statistics on Accidents at work (ESAW) coding. Each of the classes of the classification includes codes that can be selected to describe an accident of an employee at work. A computerized form of an accident reports typically include an articulate description of an accident made by a supervisor of the employee and applicable ESAW codes. Quality of classification and thus quality of an accident report is however dependent on a supervisor's input i.e., an articulate description on the accident and selection capability of ESAW codes.

It is important that accident reports are filled such that the ESAW codes are correct, and description of the accident is sufficient, since additions of information or amendments of the accident report later may be difficult. Thus, a computerized form of an accident reports typically include an articulate description of an accident made by a supervisor of an employee, which may be called as a user, and appropriate ESAW codes may be selected using computerized models of selecting of ESAW codes according to the present invention. It should be noted that computerized models may be used iteratively for selecting ESAW codes. Instead of using a term "computerized model of selecting of ESAW codes" a term computerized model may be used. These computerized models are configured to classify natural language according to accident classification codes, but, in addition to that, the computerized model indicates its states and a state of accident report by different means of a graphical user interface and guides a user to fill the accident description in a way that appropriate ESAW codes can be selected i.e. the computerized model(s) check that the accident description is such that all ESAW codes can be recognized and selected based on the accident description. These are explained below more accurately below. But in short, the computerized model and the computer user interface of an accident report give a platform that enables forming of more complete accident reports.

Accident may refer to accident of an employee at work. The accident at work is defined in EUROSTAT ESAW methodology [EUROSTAT ESAW methodology] as a discrete occurrence in the course of work which leads to physical or mental harm. The phrase 'in the course of work' means 'while engaged in an occupational activity or during the time spent at work.

A computerized model may be an artificial intelligence based model configured for natural language processing (NLP). The computerized models may be based on Bert [Bert], FinBERT [FinBert description], and FastText [FastText description].

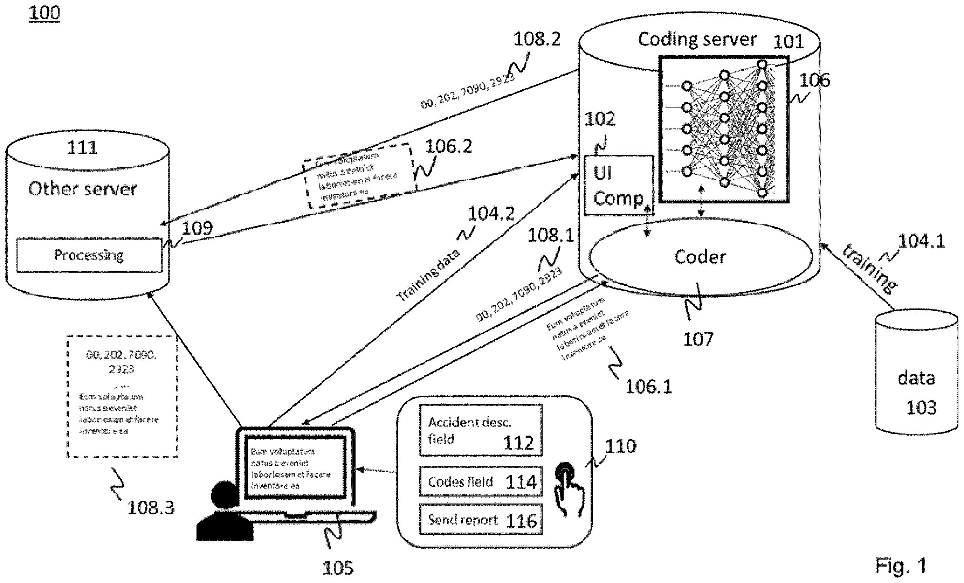

FIG. 1 is a block diagram of one possible and non-limiting system in which the example embodiments may be practiced. The system 100 comprises a coder 107, user interface component 102 and one or more computerized models 106 installed at a coding server 101. The coder, or controller, may be connected to a user interface component of a graphical user interface that may be configured to control communications with user devices for receiving user input and/or providing user output. The user input and user output may be provided by corresponding user interface elements. Examples of the user input comprise at least one of the following: natural language input in a computer readable format; accident description; or command for transmitting, or sending, accident reports. Examples of the user output comprise at least one of the following: accident classification codes; or accident report; or interface elements. The system 100 or at least a part of the system may be an occupational safety system.

The system may comprise one or more user devices 105 that may be computing devices provided with user interface devices 110 such as at least one of the following: displays; or keyboards; or touch screens; or microphones; or speakers. The user interface devices 110 may be configured to provide accident reports and/or accident report templates as graphical user interfaces on the display of user interface devices. The accident reports may be completed accident report templates that may be reviewed by the users on the user devices. The accident report templates may be draft accident reports that are to be filled out, or completed, by the users in case of accidents at work. The accident reports may comprise accident classification codes 108.1 of one or more classes and an accident description 106.1 that the users may fill to the accident report templates via user interfaces of the user devices. The user interface devices may display the accident report templates that may be completed by the users assisted by the at least one computerized model hosted at the coding server. The accident report templates may comprise a user interface element 112 for receiving an accident description, i.e., receive a natural language input in a computer readable format, from the users. The accident report templates may comprise a user interface element 114 for displaying accident classification codes that may have been generated by the at least one computerized model 106 based on the accident description received at the user interface element 112. The accident report templates may comprise a user interface element 116 for sending, or transmitting, the accident report, i.e., completed accident report template, to another system such as to an insurance company's computer system.

The accident description 106.1 is received by at least one computerized model that generates accident classification codes 108.1 based on the accident description 106.1 received by a natural language input element of the graphical user interface and the generated accident classification codes 108.1 that are received accident classification codes generated by at least one computerized model configured to classify natural language according to accident classification codes based on the natural language input received from natural language input element in a computer readable format are used to fill out the accident report template. In this way the accident report may be established by the user assisted by the at least one computerized model. It should be noted that it is not necessary to fill out all the accident classification codes or the whole accident report template with the help of the at least computerized model. Accordingly, manual input of the accident classification codes may be provided alternatively or additionally with the assisted input of the accident classification codes to the accident report template supported by the at least one computerized model.

The system may comprise a database 103 for storing training data 104.1 for training the at least one computerized model 106. On the other hand the at least one computerized model 106 may be trained based on training data 104.2 received from user devices.

The user devices may be configured to at least one of: transmit training data to the coding server 101 for training the computerized models 106; or transmitting accident descriptions 106.1 to the coding server 101; or receiving accident classification codes 108.1 from the coding server; or transmitting accident reports 108.3 to one or more further servers 111. It should be noted that the accident reports transmitted to the one or more further servers may have been completed by the user at the user device with the help of the at least one computerized model 106 hosted at the coding server 101. Therefore, the accident reports 108.3 comprise accident description prepared by the user and accident classification codes that have been at least partially or completely determined by the computerized model 106 hosted at the coding server 101.

The system may comprise one or more further servers 111 that may be configured to process 109 accident reports 108.3 received for one or more users. The one or more further servers 111 may check quality of the accident reports 108.3 by extracting accident descriptions 106.2 from the accident reports and transmitting the one or more accident descriptions to the coding server 101 which generates accident classification codes 108.2 based on the accident descriptions. The generated accident classification codes 108.2 are transmitted to the other server, where the generated accident classification codes 108.1 may be used to validate the accident classification codes received with the accident reports 108.3.

Data such as accident classification codes, accident descriptions, accident reports may be communicated between entities of the system based over data network connections. Accordingly, each entity may host an interface to a data network. Examples of the data networks comprise Internet Protocol (IP) based networks that may be wired or wireless.

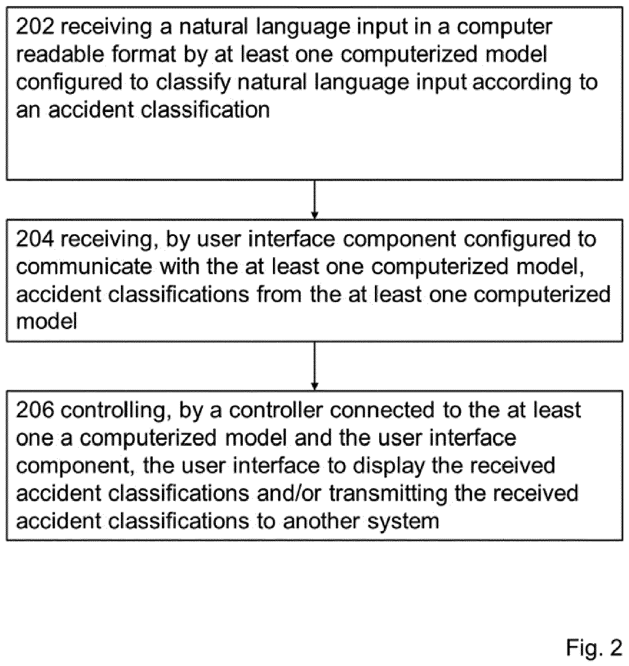

Fig. 2 illustrates an example of a method for in accordance with at least some embodiments. Phase 202 comprises receiving a natural language input in a computer readable format by at least one computerized model configured to classify natural language input according to accident classification codes; phase 204 comprises receiving, by user interface component configured to communicate with the at least one computerized model, accident classification codes from the at least one computerized model; and phase 206 comprises at least one of the following: controlling, by a controller connected to the at least one computerized model and the user interface component, the user interface to display the received accident classification codes and transmitting the received accident classification codes to another system.

In an embodiment, phase 202 comprises receiving the natural language input by two or more computerized models, and each of the computerized models is trained to a classify according to accident classification codes of different classes of the accident classification. Training of a computerized model to perform classification according to a single class is faster than if the computerized model would be trained to perform classification according to all classes. Furthermore, training of a computerized model to perform classification according to a single class facilitates achieving reliable classification in classifying natural language input, classification quality of each class may be monitored independently from other classes based on a specific computerized model, and if necessary the classification quality may be improved by further training of the specific computerized model.

In an embodiment, phase 202 comprises displaying, by the user interface component, a user interface element for receiving the natural language input in a computer readable format. In an example, the user interface element may be in a first location of the graphical user interface and be a text box, where user input may be entered in textual format for example based on a user writing on a keyboard operatively connected to the user interface component and/or by a speech-to-text functionality. The speech-to-text functionality may be provided as a part of the user interface component or an operating system configured to execute the user interface component. The speech-to-text functionality may be configured to receive audio input and perform speech recognition and conversion of the speech into text. The text may be fed to the text box and displayed inside the text box by the user interface component.

In an embodiment, phase 206 comprises transmitting, by the controller, an accident report comprising the natural language input in a computer readable format and the received accident classification codes over an interface to a data network. The received accident classification codes may be displayed in a second location of the graphical user interface that is different than the first location. In this way the accident report may be completed with the help of the at least one computerized model. Since the accident classifications of the accident report are generated by the at least one computerized model, human error may be avoided in classifying accidents and completing the accident report may be performed relatively fast since the accident classifications are generated without a need for a user, such as a supervisor to review the whole accident classification. In an example, the accident report is in JavaScript Object Notation (JSON) format. In an example, the accident report may be transmitted based on Hypertext Transfer Protocol Secure (HTTPS) protocol.

In an embodiment, phase 206 comprises that the accident classification codes comprise codes from classes according to European Statistics on Accidents at Work classification.

In an embodiment, phase 206 comprises that the accident classification codes are generated by two or more computerized models each of which is trained to perform classification of at least one of the following classes of the European Statistics on Accidents at Work classification: Working environment, Working Process, Specific Physical Activity, Deviation, Contact - Mode of injury, Material agent associated with the Specific Physical activity, Material agent associated with the deviation, Material agent associated with the Contact - Mode of injury. In this way the natural language input may be processed by more than one computerized model each of which is specialized to a part of the classes, for example, one class, of the accident classification.

At least one computerized model configured to classify natural language according to an accident classification for generating accident classifications based on a natural language input in a computer readable format.

A computer program product comprising instructions which, when the program is executed by a computer, cause the computer to carry out a method in accordance to a method described herein.

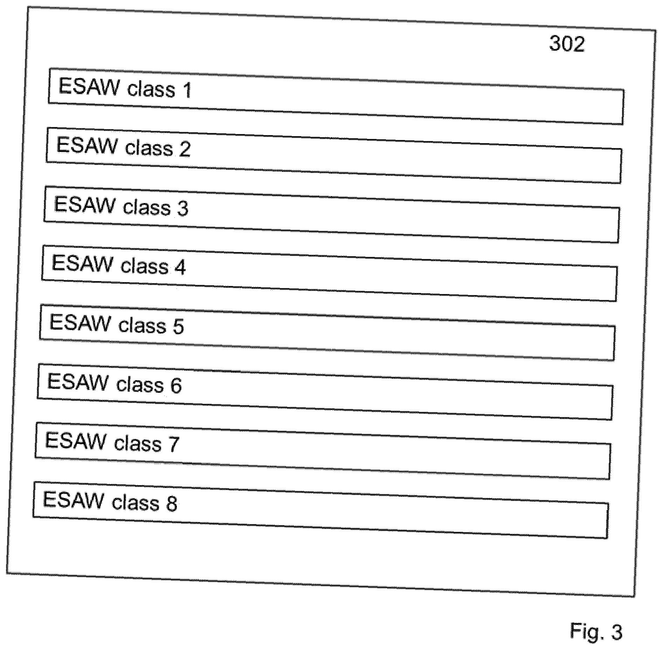

Fig. 3 illustrates an example of computerized models for classifying natural language according to accident classification codes. The computerized models may be implemented in item 106 of Fig. 1. Each of the computerized models 302 may be trained to perform classification of at least one of the following classes of the European Statistics on Accidents at Work classification: Working environment, Working Process, Specific Physical Activity, Deviation, Contact - Mode of injury, Material agent associated with the Specific Physical activity, Material agent associated with the deviation, Material agent associated with the Contact - Mode of injury. The computerized models may be connected to a controller, for example the coder 107 of Fig. 1, and /or to a user interface component 102, whereby at least one of the following may be performed: control the user interface component to display the accident classification codes generated by each of the computerized models; or transmit the accident classification codes received from each of the computerized models to another system. In an example, the accident classification codes may be transmitted to the other systems included in an accident report.

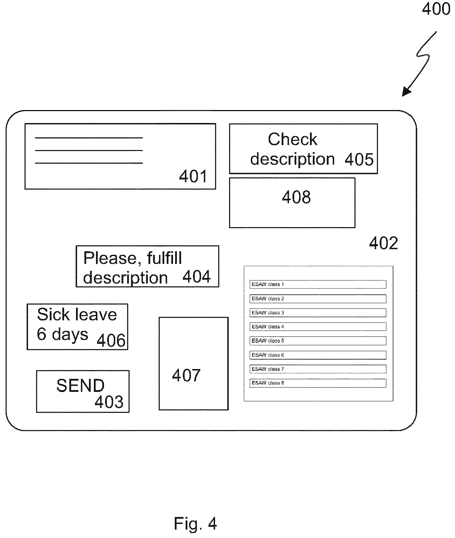

Fig. 4 illustrates an example of a graphical user interface 400 of a computerized form of an accident report. A computer system is configured to communicate with a display generation component and comprises one or more processors; and a memory storing one or more programs configured to be executed by the one or more processors. The one or more programs including instructions for displaying, via the display generation component, the graphical user interface 400. The graphical user interface 400 comprises at a first location, a natural language input element 401 configured to receive from a user an accident description as a natural language text input or a speech-to-text functionality.

The natural language input element 401 may be a text box, one or more lines, empty space or any other suitable element means for receiving the accident description as a natural language text input or a button or any other suitable element for recording speech as the accident description input using speech-to-text functionality. At a second location different from the first location, received ESAW accident classification codes 402 generated by at least one computerized model configured to classify natural language according to accident classification codes based on natural language input i.e., accident description received from natural language input element 401 in a computer readable format. The ESAW accident classification codes 402 may be in a form of a list or any other desired form. There may be, for example, 1 to 8 ESAW accident classification codes 402 at the second location. The generation of ESAW accident classification codes 402 based on the accident description by at least one computerized model that and using of the generated accident classification codes to fill out the accident report template are explained above.

It is also possible that the graphical user interface 400 further includes at the second location in connection with the received ESAW accident classification codes 402 their probability values determined based on the classified the natural language input. Alternatively probability values are arranged on their own location, for example, next to the received ESAW accident classification codes 402 at the second location. The probability values of the accident classification codes 402 may be determined using logistic regression producing a decimal between 0 and 1.0. Decimal probabilities is determined to each code 402 in a multi-class problem, as is the case of the accident classification codes 402. The idea is to produce the likelihoods of the accident description belonging to a particular accident classification codes. The computerized models may be based on Softmax, which uses a formula that basically extends the formula for logistic regression into multiple classes. Softmax is implemented through a neural network layer just before the output layer and has the same number of nodes as the output layer. It is however possible that any other suitable multiclass logistic regression method or system can be used for determining the probability values for the accident classification codes 402. As an example for probability value calculation: It is taken a value from the last layer of the neural network for each class of the variable, for example, leg=0.1242; hand=2.35; head=3.25 then they are normalized, for example, with Softmax so that the values change to a probability distribution between 0 and 1 foot=0.04; hand=0.65; head=0.9. It is a regression analysis, where instead of the probability of one object, an analysis of many objects is performed, i.e., the multi-class problem.

According to an example embodiment an accident classification code 402 is displayed in the second location only, if the at least one computerized model is able to generate the accident classification code 402 with a probability value above a predetermined threshold probability value. If it is unable to generate an accident classification code 402, the space of that code in the second location remains empty i.e., the code is not displayed.

According to an example embodiment an accident classification code 402 is displayed in the second location, after the at least one computerized model is able to generate the accident classification code based on the received the natural language input i.e., accident description received by the natural language input element 401, meaning that the accident description is adequate for generation of the accident classification code 402.

In other words, by the received or not received ESAW accident classification codes 402 the computerized model indicates its states and in addition to its own state the state of the accidental report. If one or more ESAW accident classification codes is missing, the computerized model is still in a process and waiting more accident description input. It is also possible that in the space of a missing ESAW accident classification code, the computerized model indicates a type of missing information.

The natural language input can be transmitted to the at least one computerized model for generation of the accident classification codes, for example, at predetermined intervals. The interval may be any desired and predetermined time period, for example, 1 to 5 minutes, and/or after any desired and predetermined number or words, for example, 10 to 100 words.

Alternatively, it is possible the at least one computerized model is configured to transmit natural language input to the at least one computerized model for generation of the accident classification codes 402 if there is a pause of a predetermined time period in the received natural language input i.e., a person reporting an accident stops writing at least for a predetermined time period.

The graphical user interface 400 may further include at a third location different from the first and the second locations, a selectable sending element 403 for transmitting the accident description inputted to the natural language input element 401 and the generated accident classification codes 402 as an accident report to another system such as to an insurance company's computer system. The sending element 403 may be displayed as an inactive state i.e., it not selectable or it does not exist at all, if the at least one computerized model is unable to generate one or more accident classification codes 402 based on the received accident description of the natural language input element 401 at the first location. The inactive state may be shown transparent sending element 403 or indicated by certain preselected colors, light grey, yellow etc. Again, by non-selectable sending element 403 the computerized model indicates its state i.e., the computerized model is still in a process and waiting more accident description input or alternatively hand inputted ESAW codes for missing ESAW accident classification codes.

The graphical user interface 400 may further include at a fourth location different from the first, the second and the third locations an indication of a need to fulfil the accident description i.e. a fulfil indication 404 if the at least one computerized model is unable to generate one or more accident classification codes 402 or if a probability value of one or more accident classification codes is under a threshold value predetermined for the probability value. The graphical user interface 400 may further include at the fourth location or, for example, next to it or the second location or in some other place, an indication to add or change one or more accident classification codes manually, if the at least one computerized model is unable to generate one or more accident classification codes or if a probability value of one or more accident classification codes is under a threshold value predetermined for the probability value. The indication 404 may be, for example, a sign mark, a note, or a colour code or any other suitable means for drawing attention. The note or type of indication may vary depending on a need, for example, whether there is a need of fulfilling, adding or changing.

The graphical user interface 400 may further include at a fifth location different from the first, the second, the third, and the fourth locations a selectable checking element 405 for transmitting the received natural language input to the at least one computerized model to generate the accident classification code(s) 402.

The graphical user interface 400 may further include at a sixth location different from the first, the second, the third, the fourth, and the fifth locations a sick leave indication 406 indicating a probable length of a sick leave determined based on the accident description and/or the determined accident classification codes 402. The probable length of a sick leave is an estimation predetermined for each accident classification codes 402 based on the actual sick leave days realized in previous cases for the code 402 in question.

The graphical user interface 400 may further include at the display a first colour indication 407 indicating that the probable length of the sick leave is probably configured to be above a first predetermined the probable length of the sick leave. The first colour indication 407 may be, for example, an indication, wherein a part or the whole display is coloured, for example, yellow or any other desired colour or it might be a notification mark of certain colour or any other suitable indication. The graphical user interface 400 may further include at the display a second colour indication 408, which is different than the first colour indication 407, indicating that the probable length of the sick leave is configured to be above a second predetermined the probable length of the sick leave. The second colour indication 408 may be, for example, an indication, wherein a part or the whole display is coloured, for example, red or any other desired colour or it might be a notification mark of certain colour or any other suitable indication. These kinds of colour indications 407, 408 draws a person reporting an accident at work i.e., an author to notice that the accident is such severe and sick leave will so long that the person reporting the accident reacts and gets a substitute to replace an injured employee. The graphical user interface 400 may include the first colour indication 407 at a seventh location different from the first, the second, the third, the fourth, the fifth and the sixth locations, if a part or the whole display is not coloured. The graphical user interface 400 may include the second colour indication 408 at an eighth location different from the first, the second, the third, the fourth, the fifth, the sixth and the seventh locations, if a part or the whole display is not coloured.

The computer system may also be configured to send an alarm indication to at least one more person in addition of showing a colour indication in the graphical user interface if the probable length of the sick leave is above the first predetermined the probable length of the sick leave, for example, a supervisor of the person reporting the accident or any other predetermined person, for example, by email or any other means and/or to send an alarm indication to at least one more person, for example, in addition the supervisor of the person reporting the accident to human resources (HR) officer or managing director, if the probable length of the sick leave is above the second predetermined the probable length of the sick leave.

The natural language input element 401, the ESAW accident classification codes 402, the selectable sending element 403, the fulfil indication 404, the selectable checking element 405, the sick leave indication 406, the first colour indication 407 and the second colour indication 408 can called under the collective term III elements. Their shape, colour and/or location at the graphical user interface 400 is not restricted to what is shown in figure 4, but they can vary and be modifiable as desired.

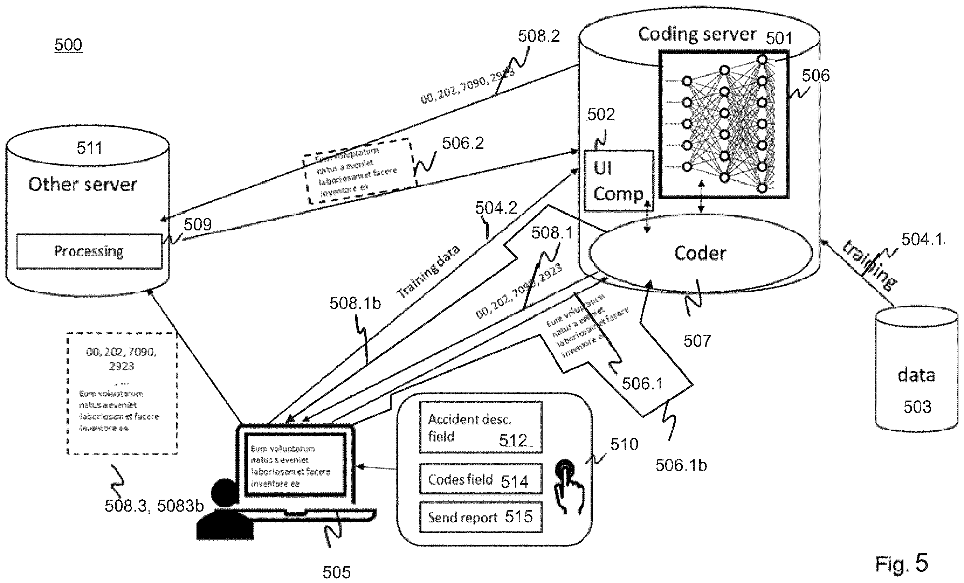

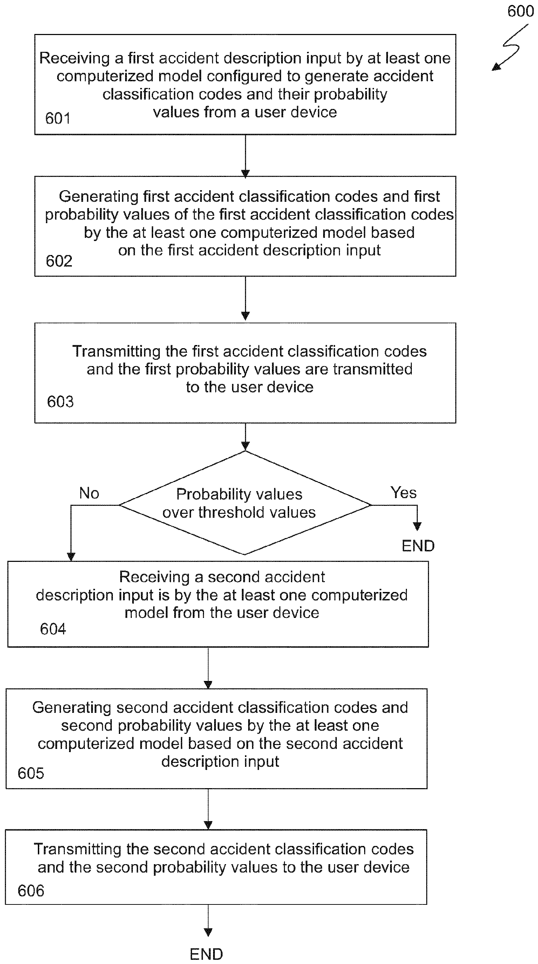

Fig. 5 a block diagram of one possible and non-limiting system in which the example embodiments of a graphical user interface may be used. The system 500, like the system 100 of fig. 1 comprises a coder 507, a user interface component 502 and one or more computerized models 506 installed at a coding server 501. The coder, or controller, may again be connected to a user interface component of a graphical user interface that may be configured to control communications with user devices for receiving user input and/or providing user output. The user input and user output may be provided by corresponding user interface elements. The system 500 or at least a part of the system 500 may be an occupational safety system.

The system 500 may comprise one or more user devices 505 that may be computing devices provided with user interface devices 510 such as at least one of the following: displays or touch screens. A user interface device 510 is configured to provide an accident report and/or an accident report template as graphical user interface on the display or the or touch screen of the user interface device 510. An accident report may be a completed i.e., filled out accident report template that may be reviewed by the user on the user device 505. The accident report may comprise accident classification codes of one or more classes and their probability values and an accident description that a user has filled out to the accident report template via user interfaces of the user devices 505. The probability value may be a decimal between 0 and 1.0 or a percentage reading. The user interface device 510 may display the accident report templates that may be completed by the user assisted by the at least one computerized model hosted at the coding server. The accident report template may comprise a first user interface element 512 for receiving an accident description, i.e. a natural language input in a computer readable format, from a user. The accident report template may comprise a second user interface element 514 for displaying accident classification codes their probability values that may have been generated by the at least one computerized model 506 based on the accident description received at the first user interface element 512. The accident report template may comprise a third user interface element 516 for sending i.e. transmitting, the accident report, i.e. the completed and filled out accident report template, to another system such as to an insurance company's computer system.

For generating first accident classification codes and their probability values for an accident report the first accident description 506.1 is received by a natural language input element of the graphical user interface in a computer readable format from a user and transmitted to at least one computerized model that generates first accident classification codes 508.1 and their probability values based on the first accident description 506.1.

Generating is performed by the at least one computerized model hosted at the coding server 501. The at least one computerized model usually generates several possibilities for each accident classification codes, but the user interface device 510 shows for each ESAW class that accident classification code, which has biggest probability value.

The user may decide by herself/himself to add additional information to the first accident description 506.1 i.e. write a second accident description 506.1b, but it is also possible that the system 500 indicates, for example by missing accident classification codes or by a predetermined color or by probability values of one or more accident classification codes 506.1 that additional information of the accident is needed, because the first accident description 506.1 does not fulfill criteria of the accident classification codes in a way that they could be determined/generated i.e. recognized from the first accident description 506.1 in a reliable way i.e. probability values of one or more accident classification codes 506.1 is low and/or under a predetermined threshold value defined for probability values of accident classification codes. This generation of new accident classification codes may be performed as many times as the user wants or until the system 500 enables transmitting of the accident report comprising the accident description and all accident classification codes, which probability values exceed the threshold values set for them. In other words, the user may after receiving and reviewing the generated first accident classification codes 508.1 and their probability values continue writing the first accident description 506.1 as the so-called second accident description 506.1b and transmit the second accident description 506.1b to the at least one computerized model for generation of the second accident classification codes 508.1b based on the second accident description 506.1b. The transmitting may occur, for example, by selecting transmitting means, for example Check description button or any other suitable element displayed by the user interface devices 510 or automatically at predetermined intervals during writing and/or after any desired and predetermined number or written words, for example, 10 to 100 words, and/or after the writing is stopped for a predetermined time, which may be any time length, for example 1 to 5 minutes. The predetermined interval may also be any desired predetermined time period, for example, 1 to 5 minutes. The first accident classification codes 508.1 and the second accident classification codes 508.1b may be the same, for example if the second accident description 506.1b does not comprise such additional information that will cause recognizing of different accident classification codes, but it is also possible that the second accident classification codes 508.1b comprise one or more different accident classification codes or one or more additional accident classification codes compared to the first accident classification codes 508.1, if the additional information of the second accident description 506.1b includes information that causes the at least one computerized model to generate different and/or additional accident classification codes. The user may transmit the first accident description 506.1 to an insurance company's computer system, if the first accident classification codes 508.1 generated based on it comprises high enough probability values, or the second accident description 506.1b, if the second accident classification codes 508.1b generated based on it comprises high enough probability values, or any further accident description, which accident classification codes generated based on it comprises high enough probability values.

In this way the accident report may be established by the user assisted by the at least one computerized model. It should still note that it may not be necessary to fill out all the accident classification codes or the whole accident report template with the help of the at least computerized model. Accordingly, manual input of the accident classification codes may be provided alternatively or additionally with the assisted input of the accident classification codes to the accident report template supported by the at least one computerized model.

The system may further comprise a database 503 for storing training data 504.1 for training the at least one computerized model 506. On the other hand the at least one computerized model 506 may be trained based on training data 504.2 received from user devices.

The user devices may be configured to at least one of: transmit training data to the coding server 501 for training the computerized models 506; or transmitting accident descriptions 508.1 to the coding server 501; or receiving accident classification codes 508.1, 508.1b from the coding server; or transmitting accident reports 508.3, 508.3b to one or more further servers 511. It should be noted that the accident reports 508.3, 508.3b transmitted to the one or more further servers may have been completed by the user at the user device with the help of the at least one computerized model 506 hosted at the coding server 501. Therefore, the accident reports 508.3, 508.3b comprise accident descriptions prepared by the user and accident classification codes 508.1, 508.1b that have been at least partially or completely determined by the computerized model 506 hosted at the coding server 501.

The system may again comprise one or more further servers 511 that may be configured to process 509 accident reports 508.3, 508.3b received for one or more users. The one or more further servers 511 may check quality of the accident report 508.3, 508.3b by extracting accident descriptions 506.1, 5061b from the accident report 508.3, 508.3b and transmitting the accident description of the accident report 508.3, 508.3b to the coding server 501 which generates third accident classification codes based on the accident description of the accident report 508.3, 508.3b transmitted to one or more further servers 511, which is now called as a third accident description 506.2. The generated third accident classification codes 508.2 are transmitted to the other server 511 from the coding server 501, where the third accident classification codes 508.2 may be used to validate the accident classification codes 508,1, 508.1b received with the accident reports 508.3, 508.3b. There may be differences between the third accident classification codes and the accident classification codes of the accident report 508.3, 508.3b, which quality is checked, for example if the 501 coding server is trained after generation of the accident classification codes of the accident report 508.3, 508.3b, for example by training data comprising a large mass of accident report data comprising accident descriptions with ESAW classification codes that is inputted to the computerized model or based on generated accident classification codes.

In an example in accordance with at least some embodiments, the second user interface element 514 for displaying accident classification codes their probability values that may have been generated by the at least one computerized model 506 based on the accident description received at the first user interface element 512 is a collection of user interface elements comprising accident classification codes and a probability value associated with each of the accident classification codes. The collection of user interface elements may comprise a classification code and an associated probability value for the following classes of the European Statistics on Accidents at Work classification: Working environment, Working Process, Specific Physical Activity, Deviation, Contact - Mode of injury, Material agent associated with the Specific Physical activity, Material agent associated with the deviation, Material agent associated with the Contact - Mode of injury. The classification codes of each class and their associated probabilities may be updated based on further user input received from the user to the accident description field. The accident description comprising the further user input may be transmitted to the computerized model and in response the user device may receive form the computerized model information indicating an adjustment applied by an output layer of the computerized model to a raw output of the computerized model, and the user device may display the received information indicating the adjustment or a change of the adjustment applied by an output layer of the computerized model to the raw output of the computerized model.

Fig. 6 illustrates an example of a method 600 for selecting accident codes in an iterative way. In step 601, a first natural language accident description input is received in a computer readable format by at least one computerized model hosted at a coding server. The at least one computerized model is configured to generate accident classification codes and probability values of the accident classification codes for the accident classification codes from a user device. In step 602, first accident classification codes and first probability values of the first accident classification codes are generated by the at least one computerized model based on the first natural language accident description input. In step 603, the generated first accident classification codes and the first probability values are transmitted to the user device. In step 604, if at least one of the first probability value of the first probability values is under a predetermined threshold value, a second natural language accident description input is received in a computer readable format by the at least one computerized model from the user device. Otherwise, the generation of accident classification codes and their probability values ends. In step 605, second accident classification codes and second probability values of the second accident classification codes are generated by the at least one computerized model based on the second natural language accident description input. In step 606, the generated second accident classification codes and the second probability values are transmitted to the user device.

The number of iterative rounds of the method 600 i.e. the number of received natural language accident description inputs, generated accident classification codes and their probability values can be more than 2. The number may depend on the content and/or quality of the received natural language accident description. By this kind of iterative generation of accident classification codes and their probability values the at least one computerized model assists, guides and ensures that accidental reports are accurate and comprise all the needed information. It should be noted that the output of the at least one computerized model is only accident classification codes and their probability values, based on the probability values, if at least one of them is under a threshold value determined for it, the user device instructs the user to fill the accident description so that it comprises all the needed information for defining accident classification codes with probability values that exceed the threshold value(s) determined for them. The way of instructing the user is described in context with the fig. 4.

Data such as accident classification codes, accident descriptions, accident reports may be communicated between entities of the system based over data network connections. Accordingly, each entity may host an interface to a data network. Examples of the data networks comprise Internet Protocol (IP) based networks that may be wired or wireless.

It should be noted that on a general level, AI models can be retrained for generating ESAW codes every time a new accident report is filled out. It means that if the person reporting the accident changes one or more of the ESAW codes determined by artificial intelligence, the change is determined (in the human opinion) as a correct choice and passed to the model as the correct choice. On the other hand, if no change is made by the person reporting the accident, it also strengthens the correct determination of code choice of an artificial intelligence model or other computerized model. Another possible teaching option is inputting a large mass of accident report data comprising accident descriptions with ESAW classification codes to the computerized model as training data. Teaching may be relevant to the selection of the following ESAW codes. It is also known that the total length of sick leave, i.e. absence due to an accident, may still not be clear even after a visit to a doctor right after the accident when the accident report if filled, because it is not unusual for accident-related sick leaves to continue, or even lengthen. The length of the sick leave i.e. absence from the work describes the severity of the accident, which as it increases also means an investment in the company's own measures.

In an example in accordance with at least some embodiments, phase 603 and/or phase 606 comprise:

- receiving, at a user device, from the computerized model information indicating an adjustment applied by an output layer of the computerized model to a raw output of the computerized model; and
- displaying, at the user device, the received information indicating the adjustment or a change of the adjustment applied by an output layer of the computerized model to the raw output of the computerized model.

In this way the user may be provided with information regarding the internal state of the computerized model. In an example the adjustment may be a probability value of a classification code, e.g. ESAW classification code. In an example the change of the adjustment may be a change of a probability value of a classification code, e.g. ESAW classification code to a previous classification code generated based on the adjustment of the output layer of the computerized model.

In an example in accordance with at least some embodiments, phase 603 and phase 606 comprise that the received information indicating the adjustment is a probability of an accident classification code adjusted by the output layer from the raw output of the computerized model to the further natural language input.

In an example in accordance with at least some embodiments, phase 603 and/or phase 606 comprises the received information indicating the adjustment further comprises information indicating one or more parameters for adjusting the raw output of the computerized model. In an example, the parameters comprise one or more hyperparameters of the computerized model. Examples of the hyperparameters comprise Learning Rate and Batch Size. It should be noted that the received information indicating the adjustment may be displayed at the user device together with any other received information from the computerized model indicating the adjustment, comprising at least one of: a probability value of an ESAW class; or a change of the probability value of an ESAW class. In this way the user may be displayed more accurate information regarding the internal state of the computerized model.

In an example in accordance with at least some embodiments, phase 603 and/or phase 606 comprises determining at the user device user the change of the adjustment applied by an output layer of the computerized model to the raw output of the computerized model based on a history of adjustments applied by the output layer of the computerized model to raw output of the computerized model. In an example, in phase 603, the user device may receive first information indicating the adjustment or a change of the adjustment applied by an output layer of the computerized model to the raw output of the computerized model, and in phase 606 the user device may receive second, or further, information indicating the adjustment or a change of the adjustment applied by an output layer of the computerized model to the raw output of the computerized model. It should be noted that depending on the number of the iterative rounds, e.g. the number of times the computerized model is provided the accident description, the user device may receive more than one, e.g. a plurality of information indicating the adjustment or a change of the adjustment applied by an output layer of the computerized model to the raw output of the computerized model. Over time, the received information indicating the adjustment or a change of the adjustment applied by an output layer of the computerized model to the raw output of the computerized model forms a history that can be used to determine the change over time. In this way more accurate information about the internal state of the computerized model may be provided by the user device, e.g. by displaying the change of the adjustment and/or the history. It should be noted that the received information indicating the adjustment may further comprise information indicating one or more parameters for adjusting the raw output of the computerized model.

In an example in accordance with at least some embodiments, phase 603 and/or phase 606 comprise receiving the information indicating the adjustment in response to:

- receiving by the user interface component a further natural language input from the user and transmitting the received further natural language input to the computerized model.

Since further input of the user is evaluated by the computerized model continuous updates to the accident report template may be provided for assisted filling out of the accident report template.

An example of the computerized model comprises a transformer network for coding accidents based on a language model, such as the BERT. The computerized model may be implemented to a data computing environment, e.g. a computer, as follows:

1. Setting Up the Environment

- Install Python along with deep learning libraries like TensorFlow or PyTorch. Both libraries support BERT and have pre-trained models available.

2. Preprocessing Your Data

- For BERT, texts need to be transformed into a format it understands, which includes tokenization using the BERT tokenizer. This converts text into tokens that match the BERT model's vocabulary.

- Texts are usually padded or truncated to a fixed length ('max_length' parameter) because BERT processes fixed-size inputs.

- Special tokens like '[CLS]' (beginning of the text) and '[SEP]' (end of the text or separator for pair tasks) are added.

3. Loading a Pre-trained BERT Model

- Load a pre-trained BERT model from a library such as Hugging Face's Transformers (https://huggingface.co/docs/transformers/index) or TensorFlow Hub (https://www.tensorflow.org/hub). These libraries provide an easy way to load pre-trained models and tokenizers.

- For classification, the model's output for the '[CLS]' token is often used, as it contains the aggregated representation of the input text.

4. Adding a Classification Layer

- On top of the pre-trained BERT model, add a classification layer or layers. The number of layers can be selected as needed.

- This usually involves adding a fully connected layer with an output size equal to the number of classes in your task. An example of the classification layer is a softmax layer a softmax layer that outputs class probabilities. For coding accidents according to ESAW classification, the softmax layer outputs probabilities for the ESAW classes.

5. Fine-tuning the Model

- BERT is pre-trained on a large corpus but not on your specific task. Fine-tuning adjusts BERT's weights slightly to adapt to the nuances of your classification task.

- Fine-tuning involves training the model on dataset of accident reports, which requires setting up an optimizer (like Adam), a loss function (commonly cross-entropy for classification tasks), and a learning rate.

6. Training and Evaluating the Model

- Split your dataset into training, validation, and test sets.

- Train the model using your training data, monitor its performance on the validation set during training to adjust hyperparameters and prevent overfitting.

- Evaluate the fine-tuned model on the test set to measure its classification performance.

The Libraries and Tools referred to above are available:

- Hugging Face's Transformers: This library provides a wide range of pre-trained models, including BERT, and utilities for loading, fine-tuning, and deploying them.

- TensorFlow and PyTorch: Both are powerful deep learning libraries that support BERT and offer extensive documentation and community support.

Softmax layer:
It should be noted that the softmax layer is a component of a neural network and placed on the output layer of the neural network. The softmax layer transforms raw output scores (also known as logits) from the network into probabilities by taking into account the relative scale of each logit. The softmax function ensures that the output values are in the range (0, 1) and sum up to 1, making them interpretable as probabilities. This property makes the softmax layer particularly useful for classification tasks where the goal is to assign the input to one of several classes e.g. classes of the ESAW classification. The softmax layer can be controlled by various ways example of which is Temperature Scaling. The softmax function with temperature $T$ applied to logits z can be defined as:

$$\text{softmax}(z\_i;\ T) = e^{((z\_i/T))}/ \text{sum\_j} ((e^{(z\_j)}/T)$$

- Higher Temperature (T > 1) makes the softmax output more uniform (i.e., the probabilities become more similar, reducing the confidence of the prediction).

- Lower Temperature (T < 1) makes the differences between the logits more pronounced, leading to more confident predictions (i.e., the probability distribution becomes more "peaky" with higher values for the maximum logits).

Adjusting weights of a language model

An example of adjusting the weights of the language mode, e.g. BERT, can involve adjusting the weights during the pre-training and/or fine-tuning phases, employing backpropagation and optimization algorithms similar to other deep learning models, can involve the following:

Adjusting weights in Pre-training Phase

1. Initialization: BERT starts with weights initialized randomly or with weights from a previously trained model if performing further pre-training (also known as continued pre-training).

2. Masked Language Model (MLM) and Next Sentence Prediction (NSP): The model is trained on two tasks simultaneously. In the MLM task, a certain percentage of input tokens are masked randomly, and the model tries to predict these masked tokens based on the context provided by the other non-masked tokens in the sequence. In the NSP task, the model learns to predict whether two given sentences naturally follow each other or not.

3. Backpropagation: For each batch of training data, BERT makes predictions for the MLM and NSP tasks. The predictions are compared to the actual labels using a loss function, which measures the model's prediction error. The gradients of this loss function with respect to the model's weights are then computed using backpropagation. This involves calculating the gradient of the loss with respect to each weight in the model, moving backward from the output layer to the input layer.

4. Optimization: The calculated gradients are used to update the model's weights. BERT typically uses the Adam optimization algorithm, which adjusts each weight based on the magnitude of its gradient and also incorporates mechanisms such as momentum and adaptive learning rates to improve convergence.

5. Iterations: This process is repeated for many epochs over the entire pre-training dataset, allowing the model to adjust its weights to reduce prediction error for the MLM and NSP tasks.

Adjusting weights in Fine-tuning Phase:

1. Initialization with Pre-trained Weights: After pre-training, BERT's weights are fine-tuned for specific downstream tasks (e.g., text classification, question answering, coding accidents according to ESAW classification). The model is initialized with weights from the pre-trained BERT model.

2. Task-specific Output Layer: For fine-tuning, a task-specific output layer is added on top of the BERT model. For example, for classification tasks, a softmax layer is added to output class probabilities. For coding accidents according to ESAW classification, the softmax layer outputs probabilities for the ESAW classes.

3. Backpropagation and Optimization (Adjusted for the Specific Task): The model is trained on the downstream task dataset, e.g. accident reports coded according to the ESAW, using backpropagation and optimization algorithms similar to the pre-training phase. However, the loss function is specific to the downstream task (e.g., cross-entropy loss for classification). Both the pre-trained weights and the weights of the new output layer are adjusted during this phase.

4. Learning Rate and Epochs: The learning rate for fine-tuning is typically much lower than during pre-training, as the starting weights are already relatively good and large updates could destabilize the learned features. Fine-tuning usually requires fewer epochs since the model is already pre-trained on a large corpus.

5. Regularization and Dropout: Techniques like dropout are also used during fine-tuning to prevent overfitting to the downstream task, ensuring the model generalizes well.

An example of adjusting the hyperparameters can involve some of the following methods:
Adjusting hyperparameters can be used to optimize the performance of a machine learning model such as a deep learning network. Hyperparameters are the configuration settings used to structure the model. Unlike model parameters that the model learns during training (e.g., weights), hyperparameters are set prior to the training process and remain constant during training. Here are some common methods for adjusting hyperparameters:

1. Manual Tuning:

- Trial and Error: Initially, start with manual tuning, e.g. experimenting with different values based on their experience or recommended values from literature.

2. Grid Search:

- Exhaustive Search: Grid search is a systematic way of searching through a specified subset of hyperparameters. You define a grid of hyperparameter values and train models for every combination in this grid, evaluating each model's performance using cross-validation or a separate validation set.

3. Random Search:

- Random Sampling**: Instead of searching through all possible combinations like in grid search, random search samples hyperparameter combinations randomly for a specified number of iterations.

4. Bayesian Optimization:

- Model-Based Search: Bayesian optimization uses a probabilistic model to map hyperparameters to a probability of a score on the objective function. It intelligently selects the next hyperparameters to evaluate by balancing exploration (trying new hyperparameters) and exploitation (using hyperparameters close to those known to perform well).

- Efficiency and Effectiveness: This approach can be more efficient than grid or random search, especially in higher-dimensional spaces, because it learns from previous evaluations.

Adam optimization algorithm:
It should be note that the Adam optimization algorithm is a popular method for training deep learning models. It was introduced by Diederik P. Kingma and Jimmy Ba in a paper titled "Adam: A Method for Stochastic Optimization," presented at the International Conference on Learning Representations (ICLR) in 2015. The name "Adam" stands for "Adaptive Moment Estimation," and the algorithm combines ideas from two other extensions of stochastic gradient descent (SGD): RMSprop (Root Mean Square Propagation) and Momentum.
Examples of Hyperparameters for the computerized model:

Batch Size (batch size)

Batch size refers to how many examples (snippets of text) are processed at once before updating the model's weight values. A larger batch size means that the model sees more examples before making adjustments to its weights, which makes the training more stable. The model updates are then, on average, better oriented towards the global minimum of the cost function, which is the goal. A smaller batch size, on the other hand, allows for more frequent updates of the model's weight values, which can help the model learn finer details of the data and potentially improve the model's generalization ability. In practice the batch size 8 each of which contains up to 512 long snippets of text (in word embedding form) has been used for the model as a result of optimization.

Learning Rate (learning rate)

Learning rate is a hyperparameter that determines how large the updates to the model's weight values are after each batch. In other words, how quickly or slowly the model learns. A high learning rate means faster updates, which can speed up the model's training, but also increases the risk of jumping over optimal weights. A lower learning rate means more cautious updates, which can help achieve a more accurate result, but training is slower and there is a risk of getting stuck in local minima. This risk is minimized by various techniques, such as the ADAM optimizer and L2 regularization. In practice the learning rate of 1e-05 (0.00001) has been used.

User device according to an embodiment may comprise a controller, or a processor, for executing computer program code. The user device may comprise memory for storing the computer program code and a user interface component operatively connected to the controller. Examples of the user devices comprise computing devices such as smartphones, tablet computers and computers. The user interface components may comprise at least one of the following: displays; or keyboards; or touch screens; or microphones; or speakers.

A controller, or coder, according to an embodiment may comprise or be operatively connected to a computerized model for communications of input data to the computerized model and/or output data from the computerized model. The controller and/or the system may comprise a computer program, instructions or code that may be executable by the data processing device, whereby execution of the computer program, instructions or code causes performance of a method in accordance with any of the embodiments described herein. The system may comprise a memory for storing information such as a computerized model and a computer program, instructions or code.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), graphic processing units (GPUs), deep learning processor (DLP), field-programmable gate arrays (FPGAs), quantum processors and processors based on multi-core processor architecture, as non-limiting examples.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## EXAMPLES OF TRAINING DATA

Training data may be used for training the one or more computerized models. Another data set, but similar to the training data, may be used of testing sufficient training of the computerized models.

Example 1.

Accident description (input to computerized model(s)):
The installers (a pair of workers) were performing ERP (special heavy base oil) pump maintenance at the power plant. The installers loosened the pump box, after a moment the pump box moved and hot ERP-splashed the installer's oil on the growth. Small ones all over the face and a bigger splash on half of the cheekbones. In addition, ERP oil was at the installer's fingertips.

ESAW- codes (output from computerized model(s)):

Working process 11
Specific physical activity 99
Deviation 99
Contact-Mode of injury 13
Material agent 2706
Type of injury 60
Part of body injured 12
Working environment 11

Example 2.

Accident description (input to computerized model(s)): The installer was at the continuous casting plant performing maintenance tasks. When leaving the job site for the workshop, the fitter felt dust or debris in his eye. The fitter sought occupational health treatment, where the debris was removed from the eye. The installer used safety glasses.
ESAW- codes (output from computerized model(s)):

Working process 52
Specific physical activity 60
Deviation 20
Contact-Mode of injury 40
Material agent 0
Type of injury 999
Part of body injured 13
Working environment 11

Example 3.

Accident description (input to computerized model(s)):
The person used a compressed air gun to clean the measuring end of the measuring tool of the bandsaw from metal shavings. In this connection, a piece of metal flew into the person's left eye. The eye was cleaned at its own occupational health station.
ESAW-codes (output from computerized model(s)):

Working process 11
Specific physical activity 10
Deviation 20
Contact-Mode of injury 16
Material agent 2711
Type of injury 10
Part of body injured 13
Working environment 11

**REFERENCES**

[EUROSTAT ESAW methodology]: "European Statistics on Accidents at Work (ESAW) Summary and methodology", ISBN 978-92-79-28419-9, 2013 Edition, also available at https://ec.europa.eu/eurostat/web/products-manuals-and-guidelines/-/ks-ra-12-102

[Transformer]: https://web.archive.org/web/20230308030441/https://en.wikipedia.org/wiki/Transformer_(machine_learning_model), https://en.wikipedia.org/wiki/Transformer_(machine_learning_model)

[BERT]: https://en.wikipedia.org/wiki/BERT_(language_model), https://web.archive.org/web/20230308021537/https://en.wikipedia.org/wiki/BERT_(langu age_model)

[FinBert description]: A. Virtanen; J. Kanerva; R. Ilo; J. Luoma; J. Luotolahti; T. Salakoski; F. Ginter; S. Pyysalo. Multilingual is not enough: BERT for Finnish. arXiv preprint arXiv:1912.07076. 2019, https://arxiv.org/abs/1912.07076

[Finbert downloads]: https://github.com/TurkuNLP/FinBERT

[FastText description]: A. Joulin, E. Grave, P. Bojanowski, T. Mikolov, Bag of Tricks for Efficient Text Classification. arXiv preprint arXiv:1607.04606. 2016

[FastText downloads]: https://fasttext.cc/

**LIST OF REFERENCE NUMBERS TO DRAWINGS**

| | |
|---|---|
| 100 | System |
| 101 | Coding server |
| 102 | User interface component |
| 103 | Database |
| 104.1 | Training data |
| 104.2 | Training data |
| 105 | User devices |
| 106 | Computerized models |
| 106.1 | Accident description |
| 106.2 | Accident description |
| 107 | Coder |
| 108.1 | Accident classification codes |
| 108.2 | Accident classification codes |
| 108.3 | Accident reports |
| 109 | Processing |
| 110 | User interface devices |
| 112, 114, 116 | User interface elements |
| 202 to 206 | Phases of Fig. 2 |
| 302 | Computerized models of Fig. 3 |
| 400 | Graphical user interface |
| 401 | Natural language input element of Fig. 4 |
| 402 | ESAW accident classification codes of Fig. 4 |
| 403 | Selectable sending element of Fig. 4 |
| 404 | Fulfil indication of Fig. 4 |
| 405 | Selectable checking element of Fig. 4 |
| 406 | Sick leave indication of Fig. 4 |
| 407 | First colour indication of Fig. 4 |
| 408 | Second colour indication of Fig. 4 |
| 500 | System |
| 501 | Coding server |
| 502 | User interface component |
| 503 | Database |
| 504.1 | Training data |
| 504.2 | Training data |
| 505 | User devices |
| 506 | Computerized models |
| 506.1 | First accident description |
| 506.1 | Second accident description |
| 506.2 | Third accident description |
| 507 | Coder |
| 508.1 | First accident classification codes |
| 508.1b | Second accident classification codes |
| 508.2 | Third accident classification codes |

| 508.3 | First accident report |
| 508.3b | Second accident report |
| 509 | Processing |
| 510 | User interface devices |
| 512, 514, 516 | User interface elements |
| 601 to 606 | Phases of Fig. 6 |

**Claims**

1. A system for coding accidents comprising:

   at least one computerized model configured to classify natural language according to accident classification codes; and
   a user interface component, wherein said user interface component is configured to communicate with the at least one computerized model for receiving accident classification codes from the at least one computerized model; and a controller connected to the at least one computerized model and the user interface component, said controller configured to cause:

   - receive a natural language input in a computer readable format by the at least one computerized model;
   - receive accident classification codes and probability values of the accident classification codes generated by the at least one computerized model based on the natural language input in a computer readable format; and at least one of the following:

      ∘ control the user interface component to display the received accident classification codes; or
      ∘ transmit the received accident classification codes to another system.

2. The system of claim 1, wherein the controller is configured to cause to:

   - receive from the computerized model information indicating an adjustment applied by an output layer of the computerized model to a raw output of the computerized model; and
   - to display the received information indicating the adjustment or a change of the adjustment applied by an output layer of the computerized model to the raw output of the computerized model.

3. The system of claim 2, wherein the received information indicating the adjustment is a probability of an accident classification code adjusted by the output layer from the raw output of the computerized model to the further natural language input.

4. The system of claim 2 or 3, wherein the received information indicating the adjustment further comprises information indicating one or more parameters for adjusting the raw output of the computerized model.

5. The system of any of claims 2 to 4, wherein the controller is configured to cause to:

   - receive the information indicating the adjustment in response to:

      ∘ receiving by the user interface component a further natural language input from the user and transmitting the received further natural language input to the computerized model.

6. The system of any of claims 1 to 5, wherein the system comprises two or more computerized models, and each of the computerized models is trained to classify according to accident classification codes of different classes of the accident classification.

7. The system of any of claims 1 to 6, wherein the controller is configured to cause:
   transmitting an accident report comprising the natural language input in a computer readable format and the received accident classification codes over an interface to a data network.

8. The system of any of claims 1 to 7, wherein said controller is further configured to cause if at least one probability value is under a predetermined threshold value determined for the at least one probability value: receive a second natural language input in a computer readable format by the at least one computerized model; and receive second accident classification codes and second probability values of the second accident classification codes generated by the at least one computerized model based on the second natural language input in a computer readable format.

9. A method for coding accidents comprising:

receiving a natural language input in a computer readable format by at least one computerized model configured to classify natural language input according to accident classification codes;
receiving, by user interface component configured to communicate with the at least one computerized model, accident classification codes and probability values of the accident classification codes from the at least one computerized model; and at least one of the following:

• controlling, by a controller connected to the at least one computerized model and the user interface component, the user interface to display the received accident classification codes; or
• transmitting the received accident classification codes to another system.

10. The method of claim 9, comprising:

- receiving from the computerized model information indicating an adjustment applied by an output layer of the computerized model to a raw output of the computerized model; and
- displaying the received information indicating the adjustment or a change of the adjustment applied by an output layer of the computerized model to the raw output of the computerized model.

11. The method of claim 10, wherein the received information indicating the adjustment is a probability of an accident classification code adjusted by the output layer from the raw output of the computerized model to the further natural language input.

12. The method of claim 10 or 11, wherein the received information indicating the adjustment further comprises information indicating one or more parameters for adjusting the raw output of the computerized model.

13. The method of any of claims 10 to 12, comprising:

- receiving the information indicating the adjustment in response to:

∘ receiving a further natural language input from the user and transmitting the received the further natural language input to the computerized model.

14. The method according to any of claims 10 to 13, wherein the method further comprises, if at least one probability value is under a predetermined threshold value determined for the at least one probability value, a second natural language input is received in a computer readable format by the at least one computerized model and second accident classification codes and probability values of the second accident classification codes are received from the at least one computerized model.

15. A computer program product comprising instructions which, when the program is executed by a computer, cause the computer to carry out a method in accordance with any of the claims 10 to 14.

Fig. 1

202 receiving a natural language input in a computer readable format by at least one computerized model configured to classify natural language input according to an accident classification

204 receiving, by user interface component configured to communicate with the at least one computerized model, accident classifications from the at least one computerized model

206 controlling, by a controller connected to the at least one a computerized model and the user interface component, the user interface to display the received accident classifications and/or transmitting the received accident classifications to another system

Fig. 2

302

ESAW class 1

ESAW class 2

ESAW class 3

ESAW class 4

ESAW class 5

ESAW class 6

ESAW class 7

ESAW class 8

Fig. 3

400

Check
description  405

408

402

Please, fulfill
description  404

Sick leave
6 days  406

407

SEND
403

ESAW class 1
ESAW class 2
ESAW class 3
ESAW class 4
ESAW class 5
ESAW class 6
ESAW class 7
ESAW class 8

401

Fig. 4

Fig. 5

600

Receiving a first accident description input by at least one computerized model configured to generate accident classification codes and their probability values from a user device
601

Generating first accident classification codes and first probability values of the first accident classification codes by the at least one computerized model based on the first accident description input
602

Transmitting the first accident classification codes and the first probability values are transmitted to the user device
603

No ◄—— Probability values over threshold values ——► Yes

END

Receiving a second accident description input is by the at least one computerized model from the user device
604

Generating second accident classification codes and second probability values by the at least one computerized model based on the second accident description input
605

Transmitting the second accident classification codes and the second probability values to the user device
606

END

Europäisches
Patentamt

European
Patent Office

Office européen
des brevets

# EUROPEAN SEARCH REPORT

Application Number

EP 24 16 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/118455 A1 (WALMART APOLLO LLC [US]) 20 June 2019 (2019-06-20) * paragraphs [0012] - [0057]; claims 1-8; figures 5-7 * | 1-15 | INV. G06F40/30 G06F16/34 |
| X | US 2021/027387 A1 (WESTHUES JOHN [US] ET AL) 28 January 2021 (2021-01-28) * claims 1-11 * | 1,9,15 | |
| X | AHADH ABDHUL ET AL: "Text mining of accident reports using semi-supervised keyword extraction and topic modeling", PROCESS SAFETY AND ENVIRONMENTAL PROTECTION, INSTITUTION OF CHEMICAL ENGINEERS, RUGBY, GB, vol. 155, 16 September 2021 (2021-09-16), pages 455-465, XP086869561, ISSN: 0957-5820, DOI: 10.1016/J.PSEP.2021.09.022 [retrieved on 2021-09-16] * section 3 * | 1-15 | |

TECHNICAL FIELDS
SEARCHED      (IPC)

G06F
G06N

The present search report has been drawn up for all claims

| Place of search | Date of completion of the search | Examiner |
|---|---|---|
| Berlin | 23 September 2024 | Alt, Susanne |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
........................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 16 2389

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | | Publication date | Patent family member(s) | | Publication date |
|---|---|---|---|---|---|
| WO 2019118455 | A1 | 20-06-2019 | US | 2019179889 A1 | 13-06-2019 |
| | | | WO | 2019118455 A1 | 20-06-2019 |
| US 2021027387 | A1 | 28-01-2021 | US | 10832347 B1 | 10-11-2020 |
| | | | US | 2021027387 A1 | 28-01-2021 |
| | | | US | 2022366510 A1 | 17-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- European Statistics on Accidents at Work (ESAW) Summary and methodology. 2013
- **DIEDERIK P. KINGMA ; JIMMY BA.** Adam: A Method for Stochastic Optimization. *International Conference on Learning Representations (ICLR),* 2015
- **A. VIRTANEN ; J. KANERVA ; R. ILO ; J. LUOMA ; J. LUOTOLAHTI ; T. SALAKOSKI ; F. GINTER ; S. PYYSALO.** Multilingual is not enough: BERT for Finnish. *arXiv preprint arXiv:1912.07076.,* 2019, https://arxiv.org/abs/1912.07076
- **A. JOULIN ; E. GRAVE ; P. BOJANOWSKI ; T. MIKOLOV.** Bag of Tricks for Efficient Text Classification. *arXiv preprint arXiv:1607.04606.,* 2016